# EUROPEAN PATENT APPLICATION

(11) **EP 0 605 159 A1**
(43) Date of publication of application: **06.07.1994**
(21) Application number: 93310216.2
(22) Date of filing: 17.12.1993
(51) Int. Cl.: F02C 7/224, F02C 7/143, F02C 3/22

(54) **Method for utilizing liquified natural gas as a heat sink for a gas turbine inlet chiller**

(30) Priority: 30.12.1992 US 998295
(71) Applicant: GENERAL ELECTRIC COMPANY, Schenectady, NY 12345 (US)
(72) Inventor: Tomlinson, Leroy Omar, Schenectady, New York 12309 (US); Lee, Daniel T., Clifton Park, New York 12065 (US)
(74) Representative: Lupton, Frederick

(57) **Abstract**

A method of vaporizing liquified natural gas fuel for a gas turbine (16) comprises the steps of:
a) matching cooling requirements for turbine inlet air to heating requirements for the liquified natural gas;
b) passing 100% of the turbine inlet air in heat exchange relationship in an inlet chiller (22) with 100% of the liquified natural gas;
c) passing cooled turbine inlet air into a compressor (12) of the gas turbine (16); and
d) passing vaporized liquified natural gas into the combustion system (14) of the gas turbine.

## Description

### TECHNICAL FIELD

This invention relates to fuels for gas turbines and, specifically, to a method for revaporizing liquified natural gas prior to injection into the combustors of a gas turbine.

### BACKGROUND PRIOR ART

The world energy situation today is such that a large amount of electric power generation is based on liquified natural gas (LNG) fuel. The reason for liquifying the natural gas (at -258° F.) is so that it can be economically transported from the producing natural gas fields to the utilization point. At the utilization point, the very low temperature LNG is revaporized by heating. The energy for heating typically comes from burning of fuel or extraction of heat from the environment. One example of the latter, particularly suited to electrical power generation plants, is the use of sea water to provide the required heat for vaporization of the very low temperature LNG. Other methods of vaporizing LNG prior to use are disclosed in the patent literature.

In U.S. Patent 4,036,028, there is described a process and apparatus for evaporating and heating LNG using heat obtained from an open gas turbine plant. The apparatus comprises a means defining a predetermined flow path for a flow of liquid natural gas and an open gas turbine system having an air intake and an exhaust flue for a flow of hot exhaust gases. The apparatus includes a first heat exchange system for cooling air taken into the air intake of the turbine system, and a second heat exchange system for extracting heat from the flow of exhaust gases in the flue, both systems serving to heat the flow of LNG with the extracted heat. It appears from the disclosure of the '028 patent that the vaporized LNG is not also used as fuel for the gas turbine.

In U.S. Patent 3,726,101, there is disclosed a method of continuously vaporizing and superheating a stream of liquified cryogenic fluid by exchange of heat with exhaust gases from a pair of gas turbines. A relatively small portion of a stream of LNG passes in heat exchange relationship with combustion air to thereby cool the combustion air. In addition, the '101 patent discloses that fuel for the gas turbines may be drawn from a composite vaporized and superheated cryogenic fluid stream.

In U.S. Patent 3,552,134, there is disclosed another process and apparatus for vaporizing LNG with turbine exhaust gases. The vaporized natural gas is then passed through heat exchange tubes in heat exchange relationship with the turbine inlet air to thereby cool the turbine input air. The vaporized natural gas is then conducted to a point of distribution or use.

In U.S. Patent 3,377,803, there is disclosed a jet engine cooling system where hot sections of the engine are cooled by a portion of a low temperature cryogenic liquid fuel that is subsequently burned in the combustion sections of the engine.

In U.K. Patent 1213725, there is disclosed a gas turbine applied in an LNG facility to vaporize the LNG by extracting heat from the gas turbine intake air and exhaust gases. The LNG vaporized by the facility is not fired in the gas turbine used to vaporize the LNG, but is apparently conducted elsewhere for use.

It is by now well known that the performance of a gas turbine used in electrical generation is significantly affected by gas turbine inlet air temperature (as recognized in several of the above mentioned patents). More specifically, gas turbine power capability is significantly increased when its inlet air temperature is reduced. While various schemes have been employed to cool the gas turbine inlet air by evaporative or non-evaporative methods, these schemes often involve complex systems. There remains a need for a simple, practical and economical method to effect gas turbine inlet chilling.

### SUMMARY OF THE INVENTION

The object of this invention is to define a simple and cost-effective system to implement the gas turbine inlet chilling methodology with its economic and environmental benefits. More specifically, this invention recognizes the previously unreported and unutilized fact that the heat required to vaporize LNG gas turbine fuel approximately equates to the cooling duty for a practical amount chilling of the gas turbine inlet air to optimize performance of the gas turbine particularly in a power generation application. As a result, currently utilized complicated systems supporting the revaporization process are eliminated, along with all of the complex system components that support the inlet air chilling system, by providing a direct link matching of the heating and cooling needs.

In an exemplary embodiment, the turbine inlet air is passed in heat exchange relationship with the LNG fuel prior to injection of the fuel into the gas turbine combustors. In other words, it has been discovered that the amount of heat required to revaporize the liquified natural gas can be extracted from ambient turbine inlet air in such a way that the liquified LNG can be vaporized and fed to the turbine combustion chamber at a desired temperature, while also cooling the turbine inlet air to a temperature which optimizes turbine performance.

The invention is particularly well suited for application in power generation combined cycle systems which incorporate gas turbines, steam turbines, generators, heat recovery steam generators and associated controls.

In accordance with its broader aspects, therefore, the invention provides a method of vaporizing liquified natural gas fuel for a gas turbine comprising the steps of:
a) passing 100% of turbine inlet air in heat exchange relationship with 100% of a liquified natural gas stream at about -250°F. to thereby vaporize the liquid natural gas stream by extraction of heat from the turbine inlet air; and
b) conducting the vaporized natural gas stream to combustors of the gas turbine.

In a related aspect, the invention relates to a combined cycle gas turbine, steam turbine system, wherein a method of enhancing gas turbine performance comprises the steps of: a) cooling the gas turbine inlet air by at least 20°F.; and b) vaporizing liquified natural gas fuel by passing the fuel in heat exchange relationship with the gas turbine inlet air; wherein step b) is the sole means by which the gas turbine inlet air is cooled and the liquified natural gas is vaporized.

As a result of the implementation of the liquified LNG vaporization/turbine inlet air cooling system of this invention, the following advantages are realized: (1) conventional heating systems for LNG revaporization are eliminated; (2) refrigeration systems for gas turbine inlet chillers are eliminated; (3) the electricity generation capacity of a gas turbine can be significantly increased over its normal capability with minimum cost; (4) thermal and chemical impacts to the environment associated with conventional LNG revaporization systems are eliminated; (5) thermal and chemical impacts to the environment associated with conventional refrigeration systems for gas turbine inlet chillers are eliminated; and (6) the system of this invention provides a source of mineral-free water which would otherwise have to be generated by a chemical demineralizer system. This amount of water supply exceeds the normal blow down requirements of a modern combined cycle power plant and presents an additional economic and environmental advantage.

Other objects and advantages of the invention will become apparent from the detailed description which follows.

### BRIEF DESCRIPTION OF THE DRAWINGS

FIGURE 1 is a schematic diagram of the LNG fuel vaporization/turbine inlet air cooling arrangement in accordance with a first exemplary embodiment of the invention; and
FIGURE 2 is a schematic diagram of the LNG fuel vaporization/turbine inlet air cooling arrangement in accordance with a second exemplary embodiment of the invention.

### BEST MODE FOR CARRYING OUT THE INVENTION

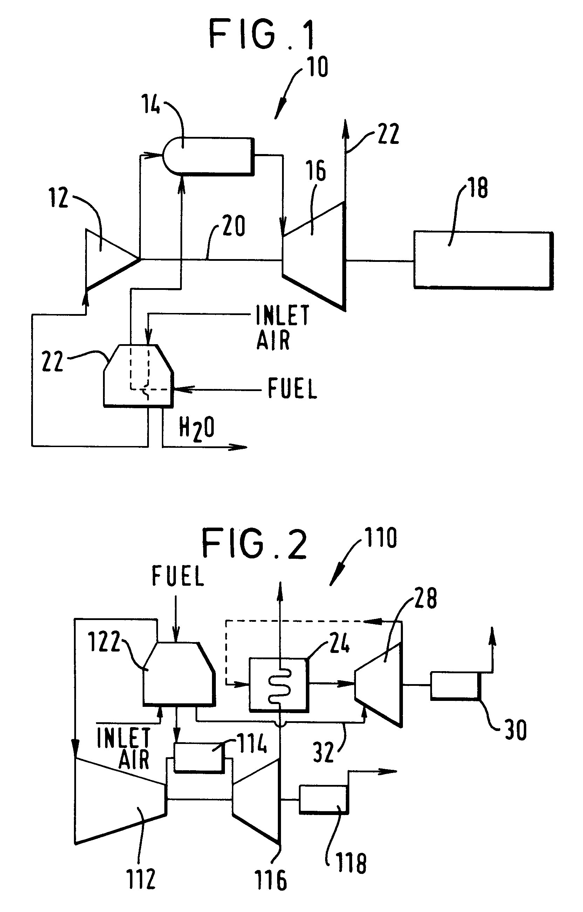

With reference to Figure 1, a simple-cycle, single shaft gas turbine arrangement 10 is shown to include an axial flow compressor 12, a combustion system 14, a gas turbine 16, and a load such as a generator 18. In this arrangement, the compressor 12 is connected to the turbine 16 and generator 18 by means of a single shaft 20. In a conventional arrangement, inlet air enters the axial flow compressor 12 at ambient conditions and is compressed to some higher pressure. No heat is added, but the temperature of the inlet air rises due to compression, so that the air at the discharge of the compressor is at a higher temperature and pressure. Upon leaving the compressor, air enters the combustion system 14 where fuel is injected into the turbine combustors where combustion takes place. The combustion gases drive the turbine 16 and are subsequently exhausted at 22. Turbine 16 drives the generator 18 in the usual manner.

In accordance with an exemplary embodiment of this invention, 100% of the ambient inlet air to the compressor 12 is first passed in heat exchange relationship with 100% of the LNG fuel stream in an evaporative chiller 22. By extracting heat from the inlet air at ambient temperature, the turbine inlet air is cooled to a more desirable temperature which increases the overall performance of the turbine. At the same time, the heat extracted from the inlet air is absorbed by the LNG to thereby revaporize the fuel prior to entry into the combustion system 12. In an exemplary embodiment, the heat content in the LNG fuel and the air to the gas turbine is coincidentally matched such that the gas turbine intake air (over a range of ambient temperatures) can be reduced approximately 30°F. so that the gas turbine power output is increased approximately 10%. At the same time, the LNG at a temperature of about -250°F. is vaporized at a temperature of about 60°F. In other words, it has been determined that, compared to a given gas turbine power generation application (using a 2300 MW gas turbine) employing sea water to vaporize LNG fuel, a 10% increase in power output can be realized by adopting the evaporization scheme of this invention. This is particularly beneficial during the summer months when peak power requirements are experienced. The fact that ambient air temperatures are also higher during the summer season enhances the process of this invention in that extraction of heat in the turbine inlet chiller is more easily accomplished.

The above process may be carried out over a wide range of ambient temperature and humidity conditions. It will be appreciated that each turbine will have its own performance characteristics and requirements as to optimum inlet air temperatures and the like. Where ambient temperatures are fairly low, however, there is the potential for condensation and/or freezing water which can foul the compressor and degrade turbine performance. In such instances, moisture separators may be employed.

It will further be appreciated that under certain ambient conditions, it will be more efficient to use, for example, sea water to effect vaporization of the LNG, and for those power generation applications which experience significant seasonal temperature differentials, a combined system utilizing the evaporization method of this invention and conventional methods using, for example, sea water, may be employed.

With reference now to Figure 2, a relatively simple combined cycle system is illustrated which also incorporates the subject matter of this invention. In a combined cycle system 110, an axial flow compressor 112, combustion system 114 and gas turbine 116 are connected to a generator 118 substantially as described above with respect to Figure 1. However, in a combined cycle system, the exhaust gas from the turbine 116 is conducted to a heat recovery steam generator 24 where it passes in heat exchange relationship with condensed steam from a steam turbine 28 arranged to drive the generator 30. Here again, 100% of the gas turbine inlet air to the compressor 112 is first passed in heat exchange relationship with 100% of the LNG fuel stream in an evaporative chiller 122 to achieve the dual benefit of reduced turbine air inlet temperature vaporization of the LNG fuel.

With further reference to Figure 2, a by-product of the invention is the production of water condensate from humid ambient air. For example, for a 140 MW gas turbine, when the ambient air is at 90°F. and 80% relative humidity, a desired 20°F. reduction in dry bulb temperature will result in a condition of 70°F. saturated air and yields 60 GPM mineral-free water condensate that may be put to good use in the combined cycle system. For example, the water may be used to generate make-up steam for the steam turbine 28 (via conduit 32).

It will be appreciated that once it has been recognized that the amount of heat required to vaporize the LNG approximately equates to the cooling duty for a desired reduction in temperature of the gas turbine inlet air, the set-up and control of the system in a way which optimizes the performance of the gas turbine would be within the ordinary skill in the art.

While the invention has been described in connection with what is presently considered to be the most practical and preferred embodiment, it is to be understood that the invention is not to be limited to the disclosed embodiment, but on the contrary, is intended to cover various modifications and equivalent arrangements included within the scope of the appended claims

## Claims

1. A method of vaporizing liquified natural gas fuel for a gas turbine comprising the steps of:
a) passing 100% of turbine inlet air in heat exchange relationship with 100% of a liquified natural gas stream at about -250°F. to thereby vaporize the liquid natural gas stream by extraction of heat from the turbine inlet air; and
b) conducting the vaporized natural gas stream to combustors of the gas turbine.

2. The method of claim 1 wherein step a) is carried out in an evaporator and wherein water condensate is drawn from said evaporator as a by-product.

3. The method of claim 2 wherein the gas turbine is used to generate electricity in a combined cycle power generation plant and wherein the water condensate is utilized to provide steam to a steam turbine.

4. The method of claim 1 wherein, during step a), turbine inlet air is reduced by about 30°F.

5. The method of claim 3 wherein, during step a), turbine inlet air is reduced by about 30°F.

6. A method of vaporizing liquified natural gas fuel for a gas turbine comprising the steps of:
a) matching cooling requirements for turbine inlet air to heating requirements for the liquified natural gas;
b) passing the turbine inlet air in heat exchange relationship with the liquified natural gas;
c) passing cooled turbine inlet air into a compressor of the gas turbine; and
d) passing vaporized liquified natural gas into combustors of the gas turbine.

7. The method of claim 6 wherein step a) is carried out in an evaporator and wherein water condensate is drawn from said evaporator as a by-product.

8. The method of claim 7 wherein the gas turbine is used to generate electricity in a power plant and wherein the water condensate is utilized in the power plant.

9. The method of claim 6 wherein, during step a), turbine inlet air is reduced by about 30°F.

10. In a combined cycle gas turbine, steam turbine system, a method of enhancing gas turbine performance comprising the steps of:
a) cooling the gas turbine inlet air by at least 20°F; and
b) vaporizing liquified natural gas fuel by passing the fuel in heat exchange relationship with the gas turbine inlet air; wherein step b) is the sole means by which the gas turbine inlet air is cooled and the liquified natural gas is vaporized.

11. The method of claim 10 wherein 100% of the gas turbine air is passed in heat exchange relationship with 100% of the liquified natural gas fuel.

12. The method of claim 10 wherein condensate created during step b) is utilized to generate steam for the steam turbine.
